# FASCICULE DE BREVET EUROPEEN

(11) **EP 3 017 220 B1**
(45) Date de publication et mention de la délivrance du brevet: **26.04.2017**
(21) Numéro de dépôt: 14736720.5
(22) Date de dépôt: 01.07.2014
(51) Int. Cl.: F16K 7/06, G21C 13/067, F16L 3/22

(54) **ENSEMBLE AVEC UN DISPOSITIF DE BLOCAGE DE TUBES, ET PROCÉDÉ DE MAINTENANCE ASSOCIÉ**
ANORDNUNG MIT EINER ROHRVERSCHLUSSVORRICHTUNG UND ZUGEHÖRIGES WARTUNGSVERFAHREN
ASSEMBLY WITH A TUBE LOCKING DEVICE, AND ASSOCIATED MAINTENANCE METHOD

(30) Priorité: 01.07.2013 FR 1356368
(43) Date de publication de la demande: 11.05.2016
(73) Titulaire: AREVA NP, 92400 Courbevoie (FR)
(72) Inventeur: PARIZE, Christophe, F-71640 Jambles (FR); CAHOUET, Laurent, F-71150 Chaudenay (FR)
(74) Mandataire: Lavoix
(86) Numéro de dépôt international: PCT/EP2014/063982
(87) Numéro de publication internationale: WO 2015/000911

(56) Documents cités:
- DE-A1- 19 726 550
- US-A- 4 833 329
- US-A1- 2010 266 093
- US-B1- 6 957 798

## Description

La présente invention concerne en général le blocage en position de tubes les uns par rapport aux autres, notamment de conduits de thermocouples de réacteur nucléaire.

Plus précisément, l'invention concerne selon un premier aspect un ensemble du type comprenant :
- une pluralité de tubes ayant des tronçons respectifs sensiblement parallèles les uns aux autres ;
- un dispositif de blocage en position des tubes les uns par rapport aux autres.

Les réacteurs nucléaires à eau sous pression comportent, à l'intérieur d'une cuve, le coeur du réacteur nucléaire constitué par des assemblages de combustibles de forme prismatique avec leur axe vertical et, au-dessus du coeur, des équipements internes supérieurs comportant en particulier un ensemble de tubes-guides verticaux permettant d'assurer le guidage des barres de commande constituées par des faisceaux de crayons placés parallèlement les uns aux autres et renfermant un matériau absorbant les neutrons.

Pour assurer la commande des réacteurs par réglage de la réactivité du coeur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages combustibles du coeur.

Les équipements internes supérieurs comportent, en général, une plaque supérieure également dénommée plaque support et une plaque inférieure constituant la plaque supérieure du coeur du réacteur nucléaire venant en appui sur l'extrémité supérieure des assemblages combustibles, lorsque les équipements internes supérieurs sont en position de service dans le coeur du réacteur. Les tubes-guides verticaux assurant le guidage des tiges de commande sont reliés à la plaque support et à la plaque inférieure qui comportent chacun une première partie intercalée entre la plaque support et la plaque inférieure et une seconde partie fixée au-dessus de cette plaque support. Des colonnes entretoises disposées entre la plaque support et la plaque inférieure, parallèlement aux tubes-guides permettent de maintenir ces plaques et d'assurer la rigidité des équipements internes supérieurs.

Les équipements internes supérieurs comprennent aussi des colonnes d'instrumentation, telles que des colonnes de thermocouples de forme cylindrique. Dans chacune des colonnes de thermocouples, est disposé un ensemble de thermocouples permettant de mesurer la température du fluide de refroidissement à la sortie d'un ensemble présélectionné d'assemblages de combustible du coeur du réacteur.

Le nombre de colonnes de thermocouples est généralement de deux ou de quatre.

Chaque colonne de thermocouples n'est pas fixée sur la plaque support des équipements internes supérieurs, mais est guidée par une fusée s'étendant verticalement au-dessus de cette plaque et qui pénètre dans la colonne de thermocouples. Par contre, chaque colonne de thermocouples est rendue solidaire du couvercle de la cuve du réacteur uniquement par des moyens d'étanchéité supérieurs, disposés entre une tubulure d'un adaptateur fixé dans une ouverture du couvercle et la partie supérieure de la colonne.

Plusieurs thermocouples sont donc disposés dans une colonne et sortent de cette colonne par des ouvertures périphériques, ménagées à la base de la colonne pour rejoindre chacun un piquage de passage au travers de la plaque support. A cet effet, chaque piquage est pourvu d'un tube de guidage disposé dans l'alignement d'un orifice ménagé dans la plaque support sensiblement à l'aplomb d'une zone où la mesure de la température doit être effectuée. Le thermocouple est introduit dans un conduit supérieur de guidage porté par la colonne de thermocouples et par un conduit inférieur de guidage disposé dans le tube du piquage correspondant. L'extrémité sensible de mesure du thermocouple est positionnée au niveau de la zone de mesure prédéterminée.

Une partie des thermocouples est destinée à mesurer la température du fluide de refroidissement du réacteur, à la sortie du coeur, en-dessous de la plaque supérieure du coeur, à proximité de l'embout supérieur des assemblages combustibles.

Les thermocouples introduits dans les conduits sont soumis à des contraintes de température et de pression élevées, si bien que certains d'entre eux peuvent présenter des défauts de fonctionnement après un certain de séjour dans la cuve du réacteur.

Ainsi, il n'est plus possible d'avoir une image fiable et représentative de la température réelle du fluide de refroidissement du coeur du réacteur.

Il est donc nécessaire de remplacer ces thermocouples et/ou ces conduits lors des opérations d'entretien programmées du réacteur nucléaire.

Le remplacement des conduits est effectué après arrêt et refroidissement du réacteur et après avoir réalisé le démontage du couvercle.

Les conduits sont généralement liés entre eux par des dispositifs de blocages. Ces dispositifs permettent de bloquer les conduits en position les uns par rapport aux autres, de manière à éviter tout contact entre les conduits. De tels contacts pourraient conduire à un percement des conduits.

Les dispositifs de blocage connus sont des agrafes soudées sur les conduits. Pour remplacer un conduit défectueux, il est nécessaire de déposer ces agrafes. Cette dépose est une opération longue et complexe. Elle peut entraîner la destruction des autres conduits liés par les agrafes au conduit défectueux.

Dans ce contexte, l'invention vise à proposer un ensemble permettant de faciliter une telle opération de remplacement.

A cette fin, l'invention porte sur un ensemble du type précité, caractérisé en ce que le dispositif de blocage comporte :
- au moins un premier bras ;
- un axe de blocage présentant une pluralité de surfaces d'appuis ;
- une liaison de l'axe de blocage au premier bras, l'axe de blocage étant mobile par rapport au premier bras entre une position de blocage dans laquelle les tronçons des tubes sont pincés chacun entre une desdites surfaces d'appui et le premier bras, et une position de libération dans laquelle les tronçons des tubes sont libres par rapport au premier bras.

Il est ainsi facile de libérer les tubes les uns par rapport aux autres, par exemple pour le remplacement d'un des tubes. Cette opération n'entraîne pas la destruction des tubes. La mise en place du dispositif de blocage est facile et rapide, de même que la libération des tubes.

Les tubes sont par exemple des conduits de thermocouples d'un réacteur nucléaire. Toutefois, les tubes peuvent être de tous autres types : des tubes de circulation de fluides, des tubes de passage de fils électriques, etc. L'invention peut s'appliquer à des tubes de centrale nucléaire ou à des tubes appartenant à toute autre installation industrielle.

L'axe de blocage comprend un nombre quelconque de surfaces d'appuis, 2, 3, 4 ou plus de 4 surfaces d'appuis. Toutes les surfaces d'appui ne sont pas nécessairement utilisées. Le nombre de surfaces d'appuis utilisées dépend de la configuration des tubes à bloquer.

Les tubes ne sont en général pas parallèles les uns aux autres sur toutes leurs longueurs. En revanche, les tronçons qui sont bloqués par le même dispositif de blocage s'étendent tous selon la même direction. Chaque tube peut avoir plusieurs tronçons bloqués en position par plusieurs dispositifs de blocage, par rapport au même ensemble de tubes ou à des ensembles de tubes différents.

Le fait que les tronçons des tubes sont pincés chacun entre une surface d'appui et le premier bras signifie ici que la surface d'appui et le premier bras exercent sur le tronçon des pressions selon deux directions opposées l'une à l'autre. Ces pressions sont appliquées à deux zones du tronçon opposées l'une à l'autre le long de la périphérie du tronçon. Les pressions sont suffisantes pour maintenir le tube en position par rapport à l'axe de blocage et au premier bras, en dépit des sollicitations appliquées au tronçon de tube. Dans le cas de conduits de thermocouples de réacteur nucléaire, ces sollicitations résultent des conditions de température et de pression à l'intérieur de la cuve du réacteur, de la circulation du fluide primaire dans la cuve, etc. Les pressions en tout état de cause sont calculées pour empêcher les tubes de venir au contact les uns des autres, au niveau des tronçons pris dans le dispositif de blocage ou à distance de ces tronçons.

Avantageusement, le dispositif de blocage comprend un second bras parallèle au premier bras et lié au premier bras, et, en position de blocage de l'axe de blocage, les tronçons d'un premier ensemble de tubes sont pincés entre le premier bras et l'axe de blocage, et les tronçons d'un second ensemble de tubes sont pincés entre le second bras et l'axe de blocage.

Il est ainsi possible de bloquer un plus grand nombre de tubes avec le même dispositif de blocage.

Les premier et second bras sont typiquement parallèles l'un à l'autre, et présentent des extrémités respectives solidarisées l'une à l'autre par une paroi. L'axe de blocage s'étend entre les premier et second bras et est lié à la paroi.

En variante, le dispositif de blocage comprend un seul bras
Avantageusement, la liaison de l'axe de blocage au premier bras est une liaison pivot autour d'un axe de pivotement.

Ainsi, il est facile de déplacer l'axe de blocage entre sa position de blocage et sa position de libération. Par exemple, quand le dispositif de blocage comporte deux bras, le déplacement de l'axe de blocage entre sa position de blocage et sa position de libération correspond à une rotation autour de l'axe de pivotement d'un angle compris entre 45° et 135°, de préférence compris entre 70 et 110°, et valant par exemple 90°.

L'axe de blocage présente par exemple des première et seconde surfaces tournées vers le premier bras respectivement en position de blocage et en position de libération. La première surface porte les surfaces d'appuis. Ces surfaces d'appuis présentent par rapport au premier bras un premier écartement correspondant sensiblement au diamètre des tronçons de tubes. Dans la position de libération, des zones de la seconde surface sont situées le long des tronçons de tubes. Ces zones présentent vis-à-vis du premier bras un second écartement supérieur au premier. Ainsi, en position de libération, les tronçons de tubes ne sont pas pincés entre l'axe de blocage et le premier bras et peuvent être évacués.

Dans un exemple de réalisation, l'axe de blocage a une section rectangulaire. La première surface correspond au petit côté de la section rectangulaire, et la seconde surface au grand côté.

En variante, les surfaces d'appui sont des dépressions de la première surface, et lesdites zones de la seconde surface sont des dépressions plus profondes que les surfaces d'appui. L'axe de blocage est alors à section circulaire ou carrée.

En variante, la liaison de l'axe de blocage au premier bras n'est pas une liaison pivot. Par exemple, l'axe de blocage se déplace entre sa position sa position de blocage et sa position de libération par translation par rapport au premier bras.

Avantageusement, l'axe de blocage et le premier bras ont des formes allongées selon l'axe de pivotement, l'axe de blocage s'étendant selon l'axe de pivotement.

En d'autres termes, l'axe de blocage pivote autour de lui-même. Cet agencement est particulièrement commode et compact.

En variante, l'axe de pivotement est perpendiculaire au premier bras et à l'axe de blocage.

Avantageusement, l'axe de blocage comprend un manchon creux déformable définissant les surfaces d'appui et un levier engagé à l'intérieur du manchon , le levier étant déplaçable par rapport au manchon entre une première position dans laquelle les surfaces d'appui sont dans des positions rétractées relativement plus écartées du premier bras, et une seconde position dans laquelle les surfaces d'appui sont dans des positions saillantes relativement plus proches du bras.

Les surfaces d'appui passent de leur position rétractée à leur position saillante par déformation du manchon, sous l'effet du déplacement du levier.

Avantageusement, l'axe de blocage présente à une première extrémité un relief prévu pour coopérer avec un outil d'entraînement en rotation de l'axe de blocage.

Ce relief permet un déplacement facile de l'axe de blocage entre sa position de blocage et sa position de libération. Ce relief peut être une empreinte en creux ou en saillie. Il présente par exemple une forme hexagonale, ou tout autre forme adaptée pour un entraînement en rotation.

Avantageusement, les surfaces d'appuis sont des dépressions creusées le long de l'axe de blocage.

Ces dépressions permettent de caler chaque tube le long de l'axe de blocage. Elles ont une profondeur permettant au tube de ne pas glisser en dehors de la dépression, compte tenu des pressions appliquées au tube par l'axe de blocage et par le premier bras. Elles sont espacées les unes des autres le long de l'axe de blocage, de préférence régulièrement espacées les unes des autres. L'espacement est choisi pour que les tubes ne puissent pas se toucher sous l'effet des sollicitations qui leur sont appliquées.

Les dépressions ont une forme permettant aux tronçons de tubes d'être reçus, en position de blocage, au fond des dépressions. Par exemple, les dépressions ont chacune une forme de rainure, débouchante à ses deux extrémités opposées. Considéré en section transversale, la rainure est délimitée par un fond arqué. En position de blocage, la rainure est parallèle aux tronçons de tubes.

En variante, l'axe de blocage porte une pluralité de reliefs en saillie, la surface d'appui étant délimitée entre deux reliefs consécutifs.

Avantageusement, l'axe de blocage est serti sur le premier bras en position de blocage.

Ainsi, l'axe de blocage est bloqué par rapport au premier bras et ne peut pas revenir en position de libération. De plus, quand un tronçon de tube doit être extrait du dispositif de blocage, le sertissage peut être éliminé plus facilement que si l'axe de blocage était soudé au premier bras.

Typiquement, un tronçon de l'axe de blocage porte extérieurement une pluralité de cannelures. Le premier bras porte une paroi, dans laquelle est ménagé un orifice traversé par ledit tronçon de l'axe de blocage. La paroi porte une collerette entourant le tronçon cannelé. Le sertissage est obtenu en rabattant la collerette sur les cannelures.

D'autres systèmes de blocage anti-rotation pourraient être utilisés à la place du sertissage : une clavette, une rondelle rabattable ou une vis de pression.

Avantageusement, le premier bras et l'axe de blocage définissent entre eux une lumière rectiligne dans laquelle sont reçus les tronçons de tubes, le premier bras portant une paroi fermant une première extrémité de ladite lumière et définissant un palier de guidage en rotation de l'axe de blocage.

Un tel agencement est particulièrement compact et commode.

Avantageusement, le premier bras et l'axe de blocage pincent entre eux les tronçons de tube selon une direction de pincement, le dispositif de blocage ayant à une seconde extrémité de la lumière opposée à la première une liaison amovible de l'axe de blocage au premier bras empêchant un écartement mutuel de l'axe de blocage et du premier bras selon la direction de pincement en position de blocage de l'axe de blocage.

Ainsi, l'écartement entre l'axe de blocage et le premier bras est limité, aux deux extrémités de la lumière. L'effort de pincement des tronçons de tubes est garanti. Les tubes ne peuvent donc pas se déplacer dans la lumière.

La liaison est établie en position de blocage de l'axe de blocage, mais pas en position de libération.

Par exemple, l'un de l'axe de blocage et du premier bras comporte un tenon, venant en prise dans une mortaise ménagée sur l'autre de l'axe de blocage et du premier bras quand l'axe de blocage est en position de blocage. Le tenon et la mortaise ne coopèrent pas en position de libération.

En variante, la liaison amovible est obtenue par encliquetage de l'axe de blocage et du premier bras l'un avec l'autre, ou par tout autre moyen.

Avantageusement, la liaison amovible ferme la lumière à sa seconde extrémité en position de blocage de l'axe de blocage et dégage la seconde extrémité en position de libération de l'axe de blocage.

Ainsi, les tronçons de tubes ne peuvent pas sortir de la lumière en position de blocage.

Selon un second aspect, l'invention vise un procédé de maintenance d'un ensemble ayant les caractéristiques ci-dessus, le procédé comprenant les étapes suivantes :
- faire passer l'axe de blocage du dispositif de blocage en position de libération ;
- évacuer le dispositif de blocage ;
- effectuer la maintenance du tube défectueux ;
- engager les tronçons de tubes entre l'axe de blocage et le premier bras d'un dispositif de blocage ;
- faire passer l'axe de blocage en position de blocage.

On peut remettre en place le même dispositif de blocage que celui qui a d'abord été évacué. Au contraire, on peut remettre en place un autre dispositif de blocage, du même type que le dispositif de blocage d'origine, par exemple un dispositif neuf.

L'invention sera mieux comprise à la lecture de la description qui va suivre, donnée à titre d'exemple et faite en référence aux dessins annexés, sur lesquels :
- la Fig. 1 est une vue schématique en coupe par un plan de symétrie verticale d'une cuve d'un réacteur nucléaire à eau sous pression,
- la Fig. 2 est une vue schématique en perspective et partielle des équipements internes supérieurs d'un réacteur nucléaire,
- les Fig. 3 et 4 sont des vues en perspectives de l'ensemble de l'invention, l'axe de blocage du dispositif de blocage étant représenté respectivement en position de libération et en position de blocage ; et
- la Fig. 5 est une vue simplifiée, en élévation, d'un autre mode de réalisation de l'ensemble de l'invention.

Dans la description qui suit, le dispositif de blocage sera décrit dans son application au blocage en position de plusieurs conduits de thermocouples d'un réacteur nucléaire à eau sous pression.

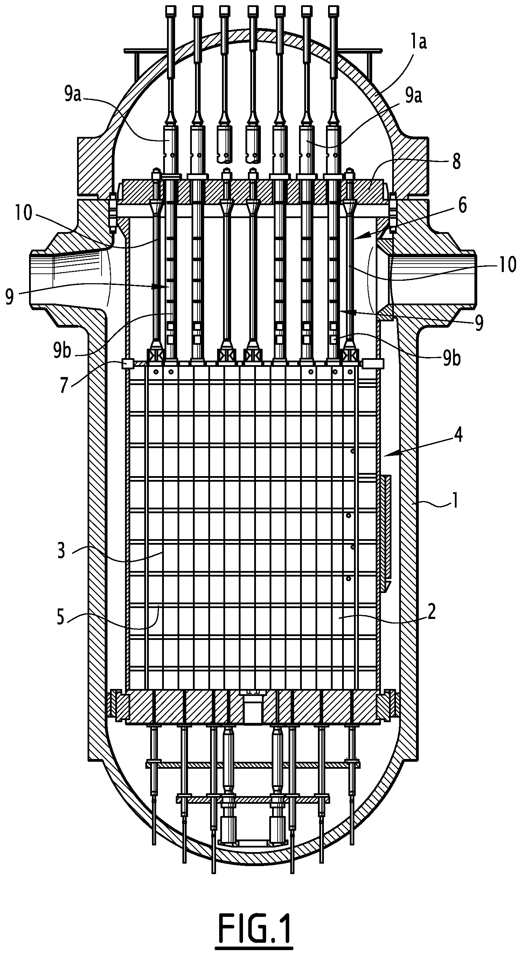

Sur la Fig. 1, on a représenté schématiquement une cuve d'un réacteur nucléaire à eau sous pression désignée par le repère 1. De manière classique, à l'intérieur de la cuve 1 du réacteur nucléaire est disposé le coeur 2 constitué par des assemblages de combustibles 3 juxtaposés de telle sorte que l'axe longitudinal des assemblages de combustibles soit vertical. Le coeur 2 du réacteur est disposé à l'intérieur des équipements internes inférieurs désignés par la référence générale 4 et qui comporte en particulier le cloisonnement 5 du coeur.

Le réacteur nucléaire comprend également des équipements internes supérieurs désignés par la référence générale 6 qui repose sur la plaque supérieure des assemblages du coeur, par l'intermédiaire d'une plaque supérieure de coeur 7.

Comme il est visible sur la Fig. 1, les équipements internes supérieurs 6 comportent une plaque support 8 des tubes-guides qui sera dénommée par la suite plaque support 8. Cette plaque support 8 s'étend parallèlement à la plaque supérieure de coeur 7 constituant la partie inférieure des équipements internes supérieurs 6 et qui est réalisée de manière à assurer la fixation des équipements internes supérieurs 6 à l'intérieur de la cuve 1.

Les équipements internes supérieurs 6 comportent des tubes-guides désignés par la référence générale 9 qui se composent, chacun au-dessus de la plaque support 8, d'une partie supérieure 9a à section circulaire et, entre la plaque support 8 des équipements internes supérieurs 6 et la plaque supérieure de coeur 7, d'une partie inférieure 9b généralement à section sensiblement carrée à angles arrondis. Chacune des parties 9a et 9b constitue un tube-guide 9 des équipements internes supérieurs 6 permettant le déplacement dans la direction verticale d'une grappe de réglage de la réactivité dans le coeur du réacteur nucléaire, reliée à une tige de suspension et de déplacement, dont le déplacement dans la direction vertical est assuré par un mécanisme, non représenté, situé au-dessus du couvercle 1 a de la cuve 1.

Entre la plaque support 8 des équipements internes supérieurs 6 et la plaque supérieure de coeur 7, sont placées en plus des parties inférieures 9b des tubes-guides 9, des colonnes entretoises 10 assurant le maintien et l'écartement de la plaque supérieure de coeur 7 par rapport à la plaque support 8.

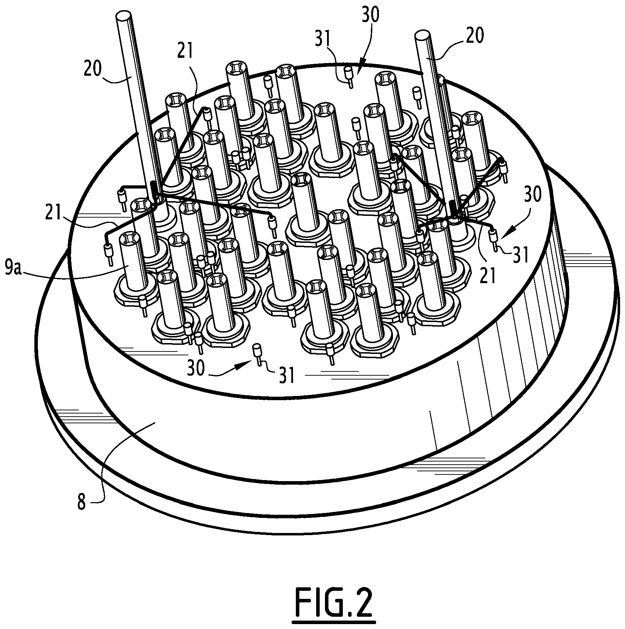

Sur la Fig. 2, on a représenté schématiquement et en perspective, la face supérieure de la plaque support 8 qui porte les parties supérieures 9a des tubes- guides 9 et dans l'exemple de réalisation représenté sur cette figure, deux colonnes de thermocouple 20 qui s'étendent parallèlement aux tubes-guides 9, au-dessus de la plaque support 8. De manière classique, dans chacune des colonnes des thermocouples 20 est disposé un ensemble de conduits supérieurs 21 de guidage chacun d'un thermocouple (non visible) permettant de mesurer la température du fluide de refroidissement à la sortie d'un ensemble d'assemblage présélectionné du coeur du réacteur nucléaire.

Ainsi que montré à la Fig. 2, plusieurs conduits supérieurs 21 de guidage sont disposés dans une colonne 20 et sortent de cette colonne par des ouvertures périphériques ménagées au-dessus du pied de la colonne de thermocouple 20 pour rejoindre chacun un piquage désigné par la référence générale 30 et destiné au passage au travers la plaque support 8 d'un thermocouple.

Sur cette figure, un nombre limité du conduit supérieur 21 a été représenté afin de ne pas surcharger la figure. Toutefois, dans la réalité, il existe un nombre élevé de conduits supérieurs 21, qui doivent être maintenus en position les uns par rapport aux autres pour éviter toute interférence entre ces conduits.

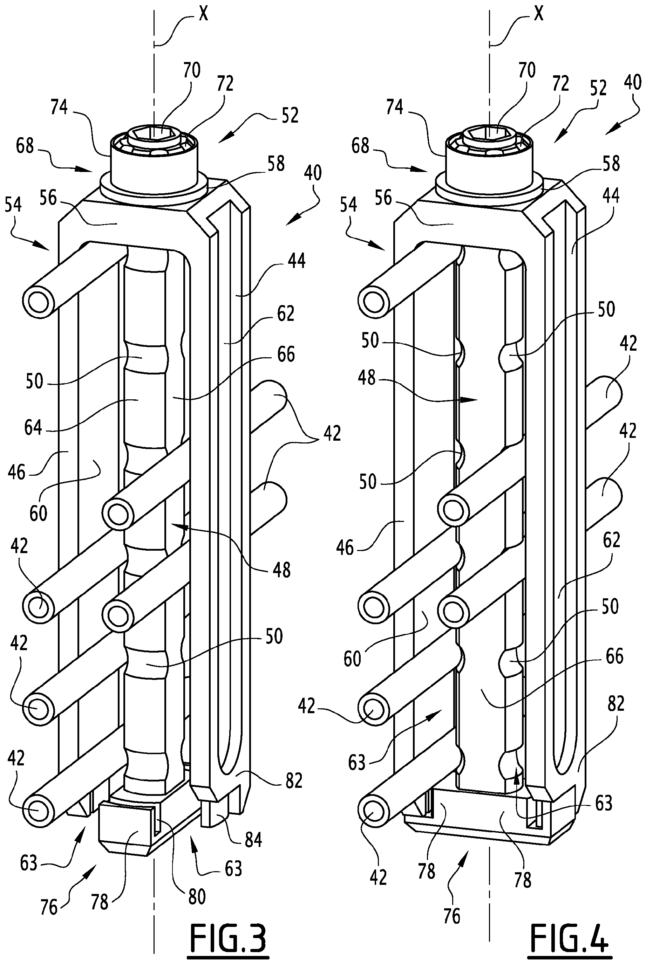

Selon l'invention, les conduits sont maintenus en position par des dispositifs 40 de blocage du type représenté sur les figures 3 et 4.

Le dispositif 40 est prévu pour bloquer en position une pluralité de tubes ayant des tronçons 42 respectifs sensiblement parallèles les uns aux autres.

Le dispositif 40 comprend :
- au moins un premier bras 44 ;
- de préférence un second bras 46 ;
- un axe de blocage 48 présentant une pluralité de surfaces d'appuis 50;
- une liaison 52 de l'axe de blocage 48 au premier bras 44.

Dans l'exemple représenté, la liaison 52 est une liaison pivot autour d'un axe de pivotement X matérialisé sur les figures.

Les premier et second bras 44 et 46 font partie d'une fourchette en U 54. Ils sont raccordés l'un à l'autre par une paroi centrale 56. La paroi 56 présente un orifice 58 traversé par l'axe de blocage 48. L'orifice 58 forme un palier de guidage pour l'axe de blocage.

Les premier et second bras 44 et 46 sont allongés parallèlement à l'axe X. Ils présentent chacun une forme de barrette plane, délimitée par deux grandes faces opposées 60 et 62. Les grandes faces 60 des premier et second bras 44 et 46 sont parallèles l'une à l'autre et tournées l'une vers l'autre. Elles sont symétriques l'une de l'autre par rapport à l'axe de pivotement X.

La paroi 56 solidarise des premières extrémités respectives des premier et second bras 44 et 46 l'une avec l'autre. Elle est sensiblement perpendiculaire à l'axe de pivotement X.

Les secondes extrémités des premier et second bras 44 et 46, à l'opposé de la paroi 56, sont libres. Elles ne sont pas directement liées l'une à l'autre.

L'axe de blocage 48 s'étend selon l'axe de pivotement X. Il est engagé entre les premier et second bras 44 et 46. Deux lumières rectilignes 63 sont ainsi délimitées entre l'axe de blocage 48 et les premier et second bras 44 et 46, dans lesquelles sont reçus les tronçons de tubes 42. La paroi 56 ferme des premières extrémités axiales des lumières 63.

Perpendiculairement à l'axe de pivotement, l'axe de blocage 48 présente une section rectangulaire. Il est ainsi délimité par deux premières surfaces axiales 64 parallèles et opposées l'une à l'autre, et deux secondes surfaces axiales 66 sensiblement perpendiculaires aux premières surfaces axiales 64. Les premières surfaces axiales 64 définissent les petits côtés de la section rectangulaire. Les secondes surfaces axiales 66 définissent les grands côtés de la section rectangulaire.

Les premières surfaces axiales 64 portent les surfaces d'appuis 50.

Les surfaces d'appuis 50 sont des dépressions creusées le long des premières surfaces axiales 64. Elles sont régulièrement espacées axialement les unes des autres.

Les dépressions sont des rainures creusées dans les premières surfaces axiales, allongées perpendiculairement à l'axe de pivotement X. Elles s'étendent chacune sur toute la largeur de la première surface axiale 64, et sont débouchantes à leurs deux extrémités opposées.

Considérée en section transversale, chaque dépression à une section arquée.

Les secondes surfaces axiales 66 sont planes et ne comportent pas de dépressions.

L'axe de blocage 48 présente un tronçon d'extrémité 68 faisant saillie par rapport à la paroi 56, au-delà des premier et second bras 44 et 46. Le tronçon 68 comporte un relief en creux 70 prévu pour coopérer avec un outil d'entraînement en rotation de l'axe de blocage. Le relief en creux 70 est creusé axialement et débouche au niveau d'une surface d'extrémité de l'axe de blocage sensiblement perpendiculaire à l'axe X.

Par ailleurs, le tronçon d'extrémité 68 porte extérieurement des cannelures 72, en vue du sertissage de l'axe de blocage sur la fourchette 54. A cette fin, la paroi 56 porte sur une face tournée à l'opposé des bras 44 et 46 une collerette 74, qui entoure la partie d'extrémité 68. Le sertissage est réalisé en rabattant la collerette 74 contre les cannelures 72, de manière à ce que la collerette 74 soit déformée et épouse la forme des cannelures 72. Alternativement les cannelures peuvent être remplacées par un filetage.

Dans ce cas, le sertissage est réalisé par un couple de vissage sur le filetage ou par un engagement à force de la collerette sur le filetage.

L'axe de blocage 48 porte un marteau 76 à son extrémité axiale opposée au tronçon 68. Le marteau 76 comporte deux ailes 78, diamétralement opposées autour de l'axe X, et s'étendant radialement à partir de l'axe de blocage 48. Chaque aile 78 comporte une mortaise 80.

Les premier et second bras 44 et 46 présentent à leurs extrémités libres 82 opposées à la paroi 56, chacune un tenon 84, prévu pour coopérer avec la mortaise 80, comme décrit plus loin.

L'axe de blocage 48 est mobile en rotation autour de l'axe X par rapport aux premier et second bras 44 et 46, entre une position de blocage dans laquelle les tronçons 42 sont pincés chacun entre une des surfaces d'appui 50 et le premier ou le second bras 44 ou 46, et une position de libération dans laquelle les tronçons 42 sont libres par rapport au premier et au second bras 44, 46. La position de libération est représentée sur la figure 3, et la position de blocage est représentée sur la figure 4.

Dans la position de libération, les secondes surfaces 66 sont tournées vers les grandes faces 60 des premier et second bras 44 et 46. Les ailes 78 sont orientées parallèlement aux grandes faces 60. Les lumières 63 ne sont donc pas obturées à leurs extrémités opposées à la paroi 56. Les mortaises 80 ne sont pas en prise avec les tenons 84. Il est donc possible d'introduire les tronçons 42 dans les lumières 63 par les extrémités ouvertes de ces lumières.

Dans la position de blocage, les premières surfaces 64 sont tournées vers les grandes faces 60 des premier et second bras 44 et 46. Les ailes 78 sont orientées perpendiculairement aux grandes faces 60. Les ailes 78 obturent les lumières 63 aux extrémités opposées à la paroi 56. Les surfaces d'appuis 50 sont orientées sensiblement parallèlement aux tronçons 42. Chaque tronçon 42 est en appui d'un côté contre le fond d'une surface d'appui, sur toute la largeur de la surface d'appui. Il est en appui du côté opposé contre la grande face 60 du premier ou du second bras 44, 46, sur toute la largeur de cette grande face. Chaque tronçon 42 est ainsi pincé suivant une direction de pincement sensiblement perpendiculaire à l'axe de pivotement X, entre la surface d'appui 50 et la grande face 60. Les mortaises 80 sont en prise avec les tenons 84. Les tenons et les mortaises coopèrent pour empêcher les premier et second bras de s'écarter de l'axe de blocage 48 selon la direction de pincement.

Le procédé de maintenance de conduits bloqués en position par un dispositif de blocage 40 du type décrit ci-dessus va maintenant être détaillé.

On considère une situation de départ dans laquelle l'axe de blocage 48 est en position de blocage, et est serti sur la fourchette 54.

La collerette 74 est d'abord éliminée, de façon à interrompre le sertissage et libérer l'axe de blocage 48. Elle est par exemple découpée à la meule.

Dans le cas où les cannelures sont remplacées par un filetage, la collerette est dessertie en exerçant un couple de dévissage. Elle peut être réutilisée pour plusieurs sertissage/dessertissage sur le filetage.

Le procédé comprend ensuite les étapes suivantes :
- faire passer l'axe de blocage 48 du dispositif de blocage 40 en position de libération ;
- évacuer le dispositif de blocage 40;
- effectuer la maintenance du conduit défectueux ;
- engager les tronçons 42 des conduits entre l'axe de blocage 48 et les premier et second bras 46, 48 d'un nouveau dispositif de blocage 40;
- faire passer l'axe de blocage 48 du nouveau dispositif de blocage 40 en position de blocage.

L'axe de blocage 48 est déplacé vers sa position de libération à l'aide d'un outil tel qu'une clé (non représentée), engagée dans l'empreinte 70. La clé est engagée et tournée par un opérateur.

Puis, le dispositif de blocage 40 est tiré axialement, de manière à faire sortir les tronçons 42 hors des lumières 63. Il est ensuite possible de remplacer ou réparer le conduit défectueux.

Un nouveau dispositif de blocage 40 est ensuite mis en place. Son axe de blocage est initialement en position de libération. Il est déplacé axialement de manière à faire pénétrer les tronçons 42 dans les lumières 63. L'axe de blocage 48 est alors déplacé vers sa position de blocage à l'aide d'un outil tel qu'une clé (non représentée), engagée dans l'empreinte 70. La clé est engagée et tournée par un opérateur.

Les tronçons 42 sont alors pincés et sont bloqués en position les uns par rapport aux autres.

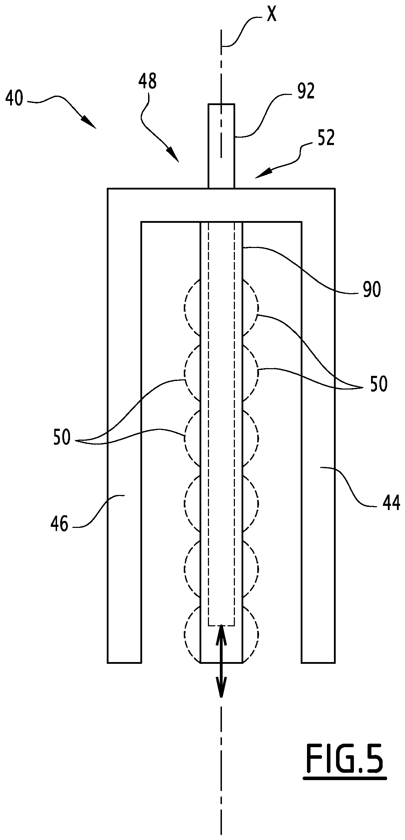

Un autre mode de réalisation de l'invention va maintenant être décrit, en référence à la figure 5. Seuls les points par lesquels le mode de réalisation de la figure 5 diffère de celui des figures 3 et 4 seront détaillés ci-dessous. Les éléments identiques ou assurant la même fonction seront désignés par les mêmes références.

Sur la figure 5, l'axe de blocage 48 comporte un manchon déformable 90 et un levier coulissant 92 engagé à l'intérieur du manchon 90. Le manchon 90 est creux, et s'étend selon l'axe X. Les surfaces d'appui 50 sont formées sur le manchon 90. Le manchon 90 est rigidement fixé aux bras 44 et 46.

Le levier 92 s'étend lui aussi selon l'axe X, et est déplaçable axialement par rapport au manchon 90 et aux bras 44, 46 entre une première position dans laquelle les surfaces d'appui 50 sont rétractées, et une seconde position dans laquelle les surfaces d'appui 50 sont saillantes.

Les positions rétractées des surfaces d'appui 50 sont représentées en traits pleins sur la figure 5, et les positions saillantes en traits interrompus. Dans leurs positions rétractées, les surfaces d'appui 50 sont relativement plus écartées des bras 44 et 46. Dans leurs positions saillantes, les surfaces d'appui 50 sont relativement plus proches des bras 44 et 46. Par exemple, le manchon 90 présente, dans la position rétractée des surfaces d'appui 50, une forme tubulaire, de base circulaire, carrée ou rectangulaire. Dans la position saillante, les surfaces d'appui 50 font saillie par rapport à ladite forme tubulaire, vers les bras 44 et 46.

Les surfaces d'appui passent de leur position rétractée à leur position saillante par déformation du manchon 90, sous l'effet du déplacement du levier 92. La déformation est une déformation élastique. L'axe de blocage 48 occupe donc sa position de blocage quand les surfaces d'appui 50 sont dans leurs positions saillantes, lesdites surfaces d'appui 50 pinçant alors les tronçons 42 des tubes contre les bras 44 et 46. L'axe de blocage 48 occupe sa position de libération quand les surfaces d'appui 50 occupent leurs positions rétractées, les tubes étant dans ce cas libres par rapport aux bras 44 et 46.

## Revendications

1. Ensemble comprenant :
- une pluralité de tubes ayant des tronçons (42) respectifs sensiblement parallèles les uns aux autres ;
- un dispositif (40) de blocage en position des tubes les uns par rapport aux autres ;
**caractérisé en ce que** le dispositif de blocage (40) comporte :
- au moins un premier bras (44) ;
- un axe de blocage (48) présentant une pluralité de surfaces d'appuis (50);
- une liaison (52) de l'axe de blocage (48) au premier bras (44), l'axe de blocage (48) étant mobile par rapport au premier bras (44) entre une position de blocage dans laquelle les tronçons (42) des tubes sont pincés chacun entre une desdites surfaces d'appui (50) et le premier bras (44), et une position de libération dans laquelle les tronçons (42) des tubes sont libres par rapport au premier bras (44).

2. Ensemble selon la revendication 1, **caractérisé en ce que** le dispositif de blocage (40) comprend un second bras (46) parallèle au premier bras (44) et lié au premier bras (44), et **en ce que**, en position de blocage de l'axe de blocage (48), les tronçons (42) d'un premier ensemble de tubes sont pincés entre le premier bras (44) et l'axe de blocage (48), et les tronçons (42) d'un second ensemble de tubes sont pincés entre le second bras (46) et l'axe de blocage (48).

3. Ensemble selon la revendication 1 ou 2, **caractérisé en ce que** la liaison (52) de l'axe de blocage (48) au premier bras (44) est une liaison pivot autour d'un axe de pivotement (X).

4. Ensemble selon la revendication 3, **caractérisé en ce que** l'axe de blocage (48) et le premier bras (44) ont des formes allongées selon l'axe de pivotement (X), l'axe de blocage (48) s'étendant selon l'axe de pivotement (X).

5. Ensemble selon la revendication 1 ou 2, **caractérisé en ce que** l'axe de blocage (48) comprend un manchon creux déformable (90) définissant les surfaces d'appui (50) et un levier (92) engagé à l'intérieur du manchon (90), le levier (92) étant déplaçable par rapport au manchon (90) entre une première position dans laquelle les surfaces d'appui (50) sont dans des positions rétractées relativement plus écartées du premier bras (44), et une seconde position dans laquelle les surfaces d'appui (50) sont dans des positions saillantes relativement plus proches du bras (44).

6. Ensemble selon l'une quelconque des revendications précédentes, **caractérisé en ce que** l'axe de blocage (48) présente à une première extrémité un relief (70) prévu pour coopérer avec un outil d'entraînement en rotation de l'axe de blocage (48).

7. Ensemble selon l'une quelconque des revendications précédentes, **caractérisé en ce que** les surfaces d'appuis (50) sont des dépressions creusées le long de l'axe de blocage (48).

8. Ensemble selon l'une quelconque des revendications précédentes, **caractérisé en ce que** l'axe de blocage (48) est serti sur le premier bras (44) en position de blocage.

9. Ensemble selon l'une quelconque des revendications précédentes, **caractérisé en ce que** le premier bras (44) et l'axe de blocage (48) définissent entre eux une lumière (63) rectiligne dans laquelle sont reçus les tronçons de tubes (42), le premier bras (44) portant une paroi (56) fermant une première extrémité de ladite lumière (63) et définissant un palier de guidage en rotation de l'axe de blocage (48).

10. Ensemble selon la revendication 9, **caractérisé en ce que** le premier bras (44) et l'axe de blocage (48) pincent entre eux les tronçons de tube (42) selon une direction de pincement, le dispositif de blocage (40) ayant à une seconde extrémité de la lumière (63) opposée à la première une liaison amovible de l'axe de blocage (48) au premier bras (44) empêchant un écartement mutuel de l'axe de blocage (48) et du premier bras (44) selon la direction de pincement en position de blocage de l'axe de blocage (48).

11. Ensemble selon la revendication 10, **caractérisé en ce que** la liaison amovible ferme la lumière (63) à sa seconde extrémité en position de blocage de l'axe de blocage (48) et dégage la seconde extrémité en position de libération de l'axe de blocage (48).

12. Ensemble selon l'une quelconque des revendications précédentes, **caractérisé en ce que** les tubes sont des conduits de thermocouples d'un réacteur nucléaire.

13. Procédé de maintenance d'un ensemble selon l'une quelconque des revendications précédentes, le procédé comprenant les étapes suivantes :
- faire passer l'axe de blocage (48) du dispositif de blocage (40) en position de libération ;
- évacuer le dispositif de blocage (40);
- effectuer la maintenance du tube défectueux ;
- engager les tronçons (42) de tubes entre l'axe de blocage (48) et le premier bras (44) d'un dispositif de blocage (40);
- faire passer l'axe de blocage (48) en position de blocage.

## Patentansprüche

1. Baugruppe, aufweisend:
- eine Mehrzahl von Rohren, die jeweilige Abschnitte (42) aufweisen, die im Wesentlichen parallel zueinander sind,
- eine Vorrichtung (40) zum Blockieren der Rohre bezüglich einander in Position,
**dadurch gekennzeichnet, dass** die Blockiervorrichtung (40) aufweist:
- mindestens einen ersten Arm (44),
- eine Blockierachse (48), die eine Mehrzahl von Stützflächen (50) aufweist,
- eine Verbindung (52) der Blockierachse (48) mit dem ersten Arm (44), wobei die Blockierachse (48) bezüglich des ersten Arms (44) zwischen einer Blockierposition, in der die Abschnitte (42) der Rohre jeweils zwischen einer der Stützflächen (50) und dem ersten Arm (44) eingeklemmt sind, und einer Löseposition, in der die Abschnitte (42) der Rohre bezüglich des ersten Arms (44) frei sind, bewegbar ist.

2. Baugruppe gemäß Anspruch 1, **dadurch gekennzeichnet, dass** die Blockiervorrichtung (40) einen zweiten Arm (46) aufweist, der parallel zum ersten Arm (44) ist, und der mit dem ersten Arm (44) verbunden ist, und dass in der Blockierposition der Blockierachse (48) die Abschnitte (42) eines ersten Satzes von Rohren zwischen dem ersten Arm (44) und der Blockierachse (48) eingeklemmt sind und die Abschnitte (42) eines zweiten Satzes von Rohren zwischen dem zweiten Arm (46) und der Blockierachse (48) eingeklemmt sind.

3. Baugruppe gemäß Anspruch 1 oder 2, **dadurch gekennzeichnet, dass** die Verbindung (52) der Blockierachse (48) mit dem ersten Arm (44) eine Schwenkverbindung um eine Schwenkachse (X) ist.

4. Baugruppe gemäß Anspruch 3, **dadurch gekennzeichnet, dass** die Blockierachse (48) und der erste Arm (44) entlang der Schwenkachse (X) langgestreckte Formen haben, wobei sich die Blockierachse (48) entlang der Schwenkachse (X) erstreckt.

5. Baugruppe gemäß Anspruch 1 oder 2, **dadurch gekennzeichnet, dass** die Blockierachse (48) aufweist: eine verformbare hohle Hülse (90), die die Stützflächen (50) definiert, und einen Hebel (92), der mit dem Inneren der Hülse (90) im Eingriff ist, wobei der Hebel (92) bezüglich der Hülse (90) zwischen einer ersten Position, in der die Stützflächen (50) in zurückgezogenen Positionen sind, die von dem ersten Arm (44) relativ weiter entfernt sind, und einer zweiten Position bewegbar ist, in der die Stützflächen (50) in Vorsprungspositionen sind, die relativ näher beim Arm (44) liegen.

6. Baugruppe gemäß irgendeinem der vorhergehenden Ansprüche, **dadurch gekennzeichnet, dass** die Blockierachse (48) an einem ersten Ende ein Relief (70) aufweist, das vorgesehen ist, um mit einem Werkzeug zum drehbaren Antreiben der Blockierachse (48) zusammenzuwirken.

7. Baugruppe gemäß irgendeinem der vorhergehenden Ansprüche, **dadurch gekennzeichnet, dass** die Stützflächen (50) Vertiefungen sind, die entlang der Blockierachse (48) ausgehöhlt sind.

8. Baugruppe gemäß irgendeinem der vorhergehenden Ansprüche, **dadurch gekennzeichnet, dass** die Blockierachse (48) in der Blockierposition auf den ersten Arm (44) gecrimpt ist.

9. Baugruppe gemäß irgendeinem der vorhergehenden Ansprüche, **dadurch gekennzeichnet, dass** der erste Arm (44) und die Blockierachse (48) zwischen einander ein geradliniges Lumen (63) definieren, in welchem die Rohrabschnitte (42) aufgenommen sind, wobei der erste Arm (44) eine Wand (56) trägt, die ein erstes Ende des Lumens (63) abschließt und ein Lager zum drehbaren Führen der Blockierachse (48) definiert.

10. Baugruppe gemäß Anspruch 9, **dadurch gekennzeichnet, dass** der erste Arm (44) und die Blockierachse (48) zwischen einander die Rohrabschnitte (42) entlang einer Klemmrichtung einklemmen, wobei die Blockiervorrichtung (40) ein zweites Ende des Lumens (63) entgegengesetzt zu dem ersten hat, wobei eine lösbare Verbindung der Blockierachse (48) mit dem ersten Arm (44) ein gegenseitiges Entfernen der Blockierachse (48) und des ersten Arms (44) entlang der Klemmrichtung in der Blockierposition der Blockierachse (48) verhindert.

11. Baugruppe gemäß Anspruch 10, **dadurch gekennzeichnet, dass** die lösbare Verbindung das Lumen (63) an seinem zweiten Ende in der Blockierposition der Blockierachse (48) schließt und das zweite Ende in der Löseposition der Blockierachse (48) freigibt.

12. Baugruppe gemäß irgendeinem der vorhergehenden Ansprüche, **dadurch gekennzeichnet, dass** die Rohre Thermoelementleitungen eines Kernreaktors sind.

13. Verfahren zum Warten einer Baugruppe gemäß irgendeinem der vorhergehenden Ansprüche, wobei das Verfahren die folgenden Schritte aufweist:
- Bringen der Blockierachse (48) der Blockiervorrichtung (40) in Löseposition,
- Räumen der Blockiervorrichtung (40),
- Durchführen der Wartung des defekten Rohres,
- In-Eingriff-Bringen der Rohrabschnitte (42) zwischen der Blockierachse (48) und dem ersten Arm (44) einer Blockiervorrichtung (40),
- Bringen der Blockierachse (48) in Blockierposition.

## Claims

1. An assembly comprising:
- a plurality of tubes having respective segments (42) substantially parallel to one another;
- a device (40) for locking the tubes in position relative to one another; **characterized in that** the locking device (40) includes:
- at least one first arm (44);
- a locking axle (48) having a plurality of bearing surfaces (50);
- a link (52) connecting the locking axle (48) to the first arm (44), the locking axle (48) being movable relative to the first arm (44) between a locking position, in which the segments (42) of the tubes are each pinched between one of said bearing surfaces (50) and the first arm (44), and a released position, in which the segments (42) of the tubes are free relative to the first arm (44).

2. The assembly according to claim 1, **characterized in that** the locking device (40) comprises a second arm (46) parallel to the first arm (44) and connected to the first arm (44), and, in the locking position of the locking axle (48), the segments (42) of a first set of tubes are pinched between the first arm (44) and the locking axle (48), and the segments (42) of a second set of tubes are pinched between the second arm (46) and the locking axle (48).

3. The assembly according to claim 1 or 2, **characterized in that** the link (52) of the locking axle (48) to the first arm (44) is a pivot link around a pivot axis (X).

4. The assembly according to claim 3, **characterized in that** the locking axle (48) and the first arm (44) have elongated shapes along the pivot axis (X), the locking axle extending along the pivot axis (X).

5. The assembly according to claim 1 or 2, **characterized in that** the locking axle (48) comprises a deformable hollow sleeve (90) defining the bearing surfaces (50) and a lever (92) engaged inside the sleeve (90), the lever (92) being movable relative to the sleeve (90) between a first position in which the bearing surfaces (50) are in retracted positions relatively further from the first arm (44), and a second position in which the bearing surfaces (50) are in protruding positions relatively closer to the arm (44).

6. The assembly according to any one of the preceding claims, **characterized in that** at a first end, the locking axle (48) has a relief (70) provided to cooperate with a tool for rotating the locking axle (48).

7. The assembly according to any one of the preceding claims, **characterized in that** the bearing surfaces (50) are depressions hollowed along the locking axle (48).

8. The assembly according to any one of the preceding claims, **characterized in that** the locking axle (48) is crimped on the first arm (44) in the locking position.

9. The assembly according to any one of the preceding claims, **characterized in that** the first arm (44) and the locking axle (48) define a rectilinear aperture (63) between them in which the tube segments (42) are received, the first arm (44) bearing a wall (56) closing a first end of said aperture (63) and defining a bearing for guiding the rotation of the locking axle (48).

10. The assembly according to claim 9, **characterized in that** the first arm (44) and the locking axle (48) pinch the tube segments (42) between then in a pinching direction, the locking device (40) having, at a second end of the aperture (63) opposite the first, a removable link connecting the locking axle (48) to the first arm (44) preventing a mutual separation between the locking axle (48) and the first arm (44) in the pinching direction in the locking position of the locking axle (48).

11. The assembly according to claim 10, **characterized in that** the removable link closes the aperture (63) at its second end in the locking position of the locking axle (48) and frees the second end in the released position of the locking axle (48).

12. The assembly according to any one of the preceding claims, **characterized in that** the tubes are for example thermocouple pipes of a nuclear reactor.

13. A maintenance method for an assembly according to any one of the preceding claims, the method comprising the following steps:
- placing the locking axle (48) of the locking device (40) in the released position;
- removing the locking device (40);
- performing maintenance on the defective tube;
- engaging the tube segments (42) between the locking axle (48) and the first arm (44) of a locking device (40);
- placing the locking axle (48) in the locking position.
